(19) Europäisches Patentamt
European Patent Office
Office européen des brevets

(11) EP 4 136 163 B1

(12) EUROPEAN PATENT SPECIFICATION

(45) Date of publication and mention of the grant of the patent:
**23.10.2024 Bulletin 2024/43**

(21) Application number: **21722717.2**

(22) Date of filing: **12.04.2021**

(51) International Patent Classification (IPC):
***C08K 3/016*** *(2018.01)* ***C08K 5/00*** *(2006.01)*
***C08L 23/08*** *(2006.01)*

(52) Cooperative Patent Classification (CPC):
(C-Sets available)
**C08K 5/0066; C08K 3/016; C08K 3/105;**
**C08L 23/0892;** C08K 5/3417; C08K 2003/387;
C08K 2201/019; C08L 2201/02; C08L 2203/202

(Cont.)

(86) International application number:
**PCT/US2021/026785**

(87) International publication number:
**WO 2021/211405 (21.10.2021 Gazette 2021/42)**

(54) **FLAME RETARDANT POLYMERIC COMPOSITION**
FLAMMWIDRIGE POLYMERZUSAMMENSETZUNG
COMPOSITION POLYMÈRE À CARACTÈRE IGNIFUGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.04.2020 US 202063009084 P**

(43) Date of publication of application:
**22.02.2023 Bulletin 2023/08**

(73) Proprietor: **Dow Global Technologies LLC**
**Midland, MI 48674 (US)**

(72) Inventors:
- **CHAUDHARY, Bharat I.**
  **Collegeville, Pennsylvania 19426 (US)**
- **SHAH, Andrew B.**
  **Collegeville, Pennsylvania 19426 (US)**
- **LIM, Chongsoo**
  **Collegeville, Pennsylvania 19426 (US)**

(74) Representative: **Beck Greener LLP**
**Fulwood House**
**12 Fulwood Place**
**London WC1V 6HR (GB)**

(56) References cited:
**WO-A1-2019/005439 WO-A1-2019/032335**
**US-A1- 2005 049 335 US-A1- 2012 273 268**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/105, C08L 23/0892;**
**C08K 5/0066, C08L 23/0892;**
**C08K 5/3417, C08L 23/0892;**
**C08L 23/0892, C08L 23/0815, C08K 5/0066, C08K 3/016;**
**C08L 23/0892, C08L 23/0815, C08K 5/3417, C08K 3/38, C08K 5/1345**

## Description

## BACKGROUND

### *Field of the invention*

The present disclosure relates to a composition suitable for wire and cable applications, and halogenated flame retardant compositions in particular.

### *Introduction*

Polymeric compositions comprising halogenated flame-retardants are known. Examples of halogenated flame retardants include brominated flame retardants. Polymeric compositions only relying on halogenated flame retardants to provide flame retardancy typically require high loadings of flame retardants, and often cannot meet the most stringent burn performance requirements. High loadings of flame retardants adversely affect the processability and mechanical performance, such as tensile elongation and impact strength, of the polymeric compositions.

During exposure to heat or flame, halogenated flame-retardant fillers are believed to form a halogenated vapor phase. The halogenated vapor phase is believed to retard flame progression through a free radical flame poisoning mechanism. In the free radical poisoning mechanism, active free radicals, that would otherwise go on to promote further exothermic reactions, are bonded with and neutralized by the halogen in the halogenated vapor.

One method of overcoming processability and mechanical performance issues associated with high halogenated filler concentration is to include a flame-retardant synergist or combinations of flame-retardant synergists. One conventional combination of flame-retardant synergists include zinc containing compounds and antimony trioxide. Zinc synergists are believed to work partly by catalyzing the release of halogens from the halogenated filler and then forming zinc halides and zinc oxyhalides in the halogenated vapor. Further, zinc synergists are known to promote char formation and prevent dripping of the combusted material. Antimony trioxide is believed to work by evolution of volatile but dense antimony halide vapors through successive transformation of halogenated antimony oxide complexes generated from reaction between halogenated flame retardant and antimony oxide as the temperature increases. This bonding of the antimony and the halogen creates various vapor phase compounds having greater stability than the halogenated vapor phase without antimony. The greater stability and higher density of the antimony halides increase the residence time of the halogenated vapor phase in proximity to the combustion zone where free radical chain reactions happen so that a greater number of free radicals are poisoned and flame progression is resisted.

The use of antimony trioxide as a flame-retardant synergist faces a variety of constraining pressures. For example, antimony trioxide faces regulatory pressure in certain jurisdictions to reduce or abandon its use. Further, sourcing of antimony trioxide may be constrained due to the location of natural deposits and geopolitical tensions. As such, the reduced use of antimony trioxide is desired, however U.S. Patent Application Publication Number 2019/0185654 demonstrates that too little antimony trioxide may result in compositions that exhibit unacceptable burn test properties. WO1029/005439 A1 discloses a moisture-cured wire and cable constructions made from moisture-crosslinkable, polymeric compositions comprising (A) a nonpolar ethylenic polymer grafted with silane, (B) a silanol condensation catalyst and (A) a flame retardant additive. The flame retardant additive is a halogenated flame retardant such as ethylene-bis(tetrabromophthalmide). The invention comprises at least one halogen-free flame retardant such as zinc borate. US 2005/049335 A1 discloses flame retardant insulation compositions for wire and cable comprising i.a. (a) an ethylene-silane copolymer, (c) halogenated flame retardant and (e) a silanol condensation catalyst. Particularly desirable is to employ brominated aromatic compounds such as ethylenebistetrabromophthalimide. It is preferred to include an inorganic synergist compound such as zinc oxide or zinc borate. Further, simply increasing the halogenated filler component may negatively affect mechanical properties of the composition. Zinc synergists, although working in a somewhat similar manner as antimony trioxide works in halogenated flame retardant technology, is not known to be an effective flame retardant synergist in the absence of antimony trioxide. Considering benefit of less toxicity and relatively more economical cost of zinc synergists compared to antimony trioxide, it would be of critical importance if some or all antimony trioxide can be replaced by corresponding zinc synergists while achieving equal or better flame retardant performances.

In view of the foregoing, it would be surprising to discover a polymeric composition that is free of antimony trioxide, enables a coated conductor made of it to pass a VW-1 Burn Test and has a zinc to bromine ("Zn:Br") molar ratio from greater than 0 to 0.160.

## SUMMARY OF THE DISCLOSURE

The present invention provides a polymeric composition that is free of antimony trioxide, enables a coated conductor made of it to pass a VW-1 Burn Test and has a Zn:Br molar ratio from greater than 0 to 0.160.

The inventors of the present application have discovered that polymeric compositions having a Zn:Br molar ratio of greater than 0.0 to 0.160 and comprising a silanol functionalized polyolefin, a brominated flame retardant and a zinc flame retardant synergist can be free of antimony trioxide and can enable a coated conductor made of said polymeric composition to pass the VW-1 Burn Test. The polymeric composition is surprising because despite the understood importance of antimony trioxide to flame retardant properties, the coated conductor made of said polymeric composition passes the VW-1 Burn Test. Also surprising is that despite the multiple benefits of adding zinc based synergists, coated conductors comprising the compositions that pass the VW-1 Burn Test have a Zn:Br molar ratio that is lower than conventional synergist to bromine molar ratios. The elimination of antimony trioxide is particularly advantageous as the use of antimony trioxide is under increasing regulatory pressure around the world. Further, the discovered Zn:Br molar ratio is large enough that inexpensive zinc synergist can be used to replace comparatively expensive brominated flame retardants thereby reducing production costs of the polymeric composition.

The polymeric compositions of the present invention are particularly useful in the manufacture of wires and cables.

According to a first feature of the present disclosure, the polymeric composition includes a silane functionalized polyolefin, a brominated flame retardant having a Temperature of 5% Mass Loss from 350°C to 500°C and from 2 wt% to 50 wt% Retained Mass at 650°C. The 5% Mass Loss and Retained Mass at 650°C are measured according to Thermogravimetric Analysis. The polymeric composition also includes a zinc (Zn) flame retardant synergist. The polymeric composition is free of antimony trioxide and has a zinc to bromine (Br) molar ratio (Zn:Br molar ratio) of greater than 0.0 to 0.160.

According to a second feature of the present disclosure, the polymeric composition comprises from 0.001 wt% to 5.0 wt% of a silanol condensation catalyst based on a total weight of the polymeric composition.

According to a third feature of the present disclosure the polymeric composition further comprises 5 wt% to 30 wt% of a second polyolefin based on a total weight of the polymeric composition, wherein the second polyolefin has a crystallinity at 23°C of from 0 wt% to 80 wt% as measured according to Crystallinity Testing.

According to a fourth feature of the present disclosure, the brominated flame retardant comprises ethylene bis-tetrabromophthalimide.

According to a fifth feature of the present disclosure, the polymeric composition comprises from 5 wt% to 45 wt% of ethylene bis-tetrabromophthalimide based on a total weight of the polymeric composition.

According to a sixth feature of the present disclosure, the polymeric composition comprises from 20 wt% to 80 wt% of the silane functionalized polyolefin based on a total weight of the polymeric composition.

According to a seventh feature of the present disclosure, the zinc flame retardant synergist is selected from the group consisting of zinc borate, zinc carbonate, zinc carbonate hydroxide, hydrated zinc borate, zinc phosphate, zinc stannate, zinc hydrostannate, zinc sulfide, zinc oxide and combinations thereof.

According to an eighth feature of the present disclosure, the Zn:Br molar ratio is from greater than 0.0 to 0.135.

According to a ninth feature of the present disclosure, a coated conductor comprises a conductor and the polymeric composition disposed at least partially around the conductor.

According to a tenth feature of the present disclosure, the coated conductor passes a Horizontal Burn Test.

According to an eleventh feature of the present disclosure, the coated conductor passes a VW-1 Burn Test.

## DETAILED DESCRIPTION

As used herein, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

All ranges include endpoints unless otherwise stated.

Test methods refer to the most recent test method as of the priority date of this document unless a date is indicated with the test method number as a hyphenated two-digit number. References to test methods contain both a reference to the testing society and the test method number. Test method organizations are referenced by one of the following abbreviations: ASTM refers to ASTM International (formerly known as American Society for Testing and Materials); EN refers to European Norm; DIN refers to Deutsches Institut für Normung; and ISO refers to International Organization for Standards.

As used herein, the term weight percent ("wt%") designates the percentage by weight a component is of a total weight of the polymeric composition unless otherwise indicated.

As used herein, a "CAS number" is the chemical services registry number assigned by the Chemical Abstracts Service.

*Polymeric composition*

The present disclosure is directed to a polymeric composition. The polymeric composition comprises a silane functionalized polyolefin, a brominated flame retardant and a zinc flame retardant synergist. The polymeric composition has an zinc (Zn) to bromine (Br) molar ratio (Zn:Br molar ratio) of greater than 0.0 to 0.160. The polymeric composition may optionally include a second polyolefin.

*Silane functionalized polyolefin*

The polymeric composition comprises a silane functionalized polyolefin. A "silane-functionalized polyolefin" is a polymer that contains silane and equal to or greater than 50 wt%, or a majority amount, of polymerized α-olefin, based on the total weight of the silane-functionalized polyolefin. "Polymer" means a macromolecular compound prepared by reacting (i.e., polymerizing) monomers of the same or different type. As noted above, the polymeric composition comprises the silane-functionalized polyolefin. The silane-functionalized polyolefin crosslinks and in doing so increases the resistance to flow of the polymeric composition at elevated temperatures.

The silane-functionalized polyolefin may include an α-olefin and silane copolymer, a silane-grafted polyolefin, and/or combinations thereof. An "α-olefin and silane copolymer" (α-olefin/silane copolymer) is formed from the copolymerization of an α-olefin (such as ethylene) and a hydrolyzable silane monomer (such as a vinyl silane monomer) such that the hydrolyzable silane monomer is incorporated into the backbone of the polymer chain prior to the polymer's incorporation into the polymeric composition. A "silane-grafted polyolefin" or "Si-g-PO" may be formed by the Sioplas process in which a hydrolyzable silane monomer is grafted onto the backbone of a base polyolefin by a process such as extrusion, prior to the polymer's incorporation into the polymeric composition.

In examples where the silane-functionalized polyolefin is an α-olefin and silane copolymer, the silane-functionalized polyolefin is prepared by the copolymerization of at least one α-olefin and a hydrolyzable silane monomer. In examples where the silane-functionalized polyolefin is a silane grafted polyolefin, the silane-functionalized polyolefin is prepared by grafting one or more hydrolyzable silane monomers on to the polymerized α-olefin backbone of a polymer.

The silane-functionalized polyolefin may comprise 50 wt% or greater, 60 wt% or greater, 70 wt% or greater, 80 wt% or greater, 85 wt% or greater, 90 wt% or greater, or 91 wt% or greater, or 92 wt% or greater, or 93 wt% or greater, or 94 wt% or greater, or 95 wt% or greater, or 96 wt% or greater, or 97 wt% or greater, or 97.5 wt% or greater, or 98 wt% or greater, or 99 wt% or greater, while at the same time, 99.5 wt% or less, or 99 wt% or less, or 98 wt% or less, or 97 wt% or less, or 96 wt% or less, or 95 wt% or less, or 94 wt% or less, or 93 wt% or less, or 92 wt% or less, or 91 wt% or less, or 90 wt% or less, or 85 wt% or less, or 80 wt% or less, or 70 wt% or less, or 60 wt% or less of α-olefin as measured using Nuclear Magnetic Resonance (NMR) or Fourier-Transform Infrared (FTIR) Spectroscopy. The α-olefin may include $C_2$, or $C_3$ to $C_4$, or $C_6$, or $C_8$, or $C_{10}$, or $C_{12}$, or $C_{16}$, or $C_{18}$, or $C_{20}$ α-olefins, such as ethylene, propylene, 1-butene, 1-hexene, 4-methyl-1-pentene, and 1-octene. Other units of the silane-functionalized polyolefin may be derived from one or more polymerizable monomers including, but not limited to, unsaturated esters. The unsaturated esters may be alkyl acrylates, alkyl methacrylates, or vinyl carboxylates. The alkyl groups can have from 1 to 8 carbon atoms, or from 1 to 4 carbon atoms. The carboxylate groups can have from 2 to 8 carbon atoms, or from 2 to 5 carbon atoms. Examples of acrylates and methacrylates include, but are not limited to, ethyl acrylate, methyl acrylate, methyl methacrylate, t-butyl acrylate, n-butyl acrylate, n-butyl methacrylate, and 2 ethylhexyl acrylate. Examples of vinyl carboxylates include, but are not limited to, vinyl acetate, vinyl propionate, and vinyl butanoate.

The silane-functionalized polyolefin has a density of 0.860 grams per cubic centimeter (g/cc) or greater, or 0.870 g/cc or greater, or 0.880 g/cc or greater, or 0.890 g/cc or greater, or 0.900 g/cc or greater, or 0.910 g/cc or greater, or 0.915 g/cc or greater, or 0.920 g/cc or greater, or 0.921 g/cc or greater, or 0.922 g/cc or greater, or 0.925 g/cc to 0.930 g/cc or greater, or 0.935 g/cc or greater, while at the same time, 0.970 g/cc or less, or 0.960 g/cc or less, or 0.950 g/cc or less, or 0.940 g/cc or less, or 0.935 g/cc or less, or 0.930 g/cc or less, or 0.925 g/cc or less, or 0.920 g/cc or less, or 0.915 g/cc or less as measured by ASTM D792.

A "hydrolyzable silane monomer" is a silane-containing monomer that will effectively copolymerize with an α-olefin (e.g., ethylene) to form an α-olefin/silane copolymer (such as an ethylene/silane copolymer), or graft to an α-olefin polymer (i.e., a polyolefin) to form a Si-g-polyolefin, thus enabling subsequent crosslinking of the silane-functionalized polyolefin. A representative but not limiting example of a hydrolyzable silane monomer has structure (I):

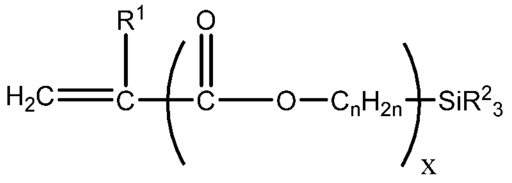

Structure (I)

in which $R^1$ is a hydrogen atom or methyl group; x is 0 or 1; n is an integer from 1 to 4, or 6, or 8, or 10, or 12; and each $R^2$ independently is a hydrolyzable organic group such as an alkoxy group having from 1 to 12 carbon atoms (e.g., methoxy, ethoxy, butoxy), an aryloxy group (e.g., phenoxy), an araloxy group (e.g., benzyloxy), an aliphatic acyloxy group having from 1 to 12 carbon atoms (e.g., formyloxy, acetyloxy, propanoyloxy), an amino or substituted amino group (e.g., alkylamino, arylamino), or a lower-alkyl group having 1 to 6 carbon atoms, with the proviso that not more than one of the three $R^2$ groups is an alkyl. The hydrolyzable silane monomer may be copolymerized with an $\alpha$-olefin (such as ethylene) in a reactor, such as a high-pressure process, to form an $\alpha$-olefin/silane copolymer. In examples where the $\alpha$-olefin is ethylene, such a copolymer is referred to herein as an ethylene/silane copolymer. The hydrolyzable silane monomer may also be grafted to a polyolefin (such as a polyethylene) by the use of an organic peroxide, such as 2,5-bis(tert-butylperoxy)-2,5-dimethylhexane, to form a Si-g-PO or an in-situ Si-g-PO. The in-situ Si-g-PO is formed by a process such as the MONOSIL process, in which a hydrolyzable silane monomer is grafted onto the backbone of a polyolefin during the extrusion of the present composition to form a coated conductor, as described, for example, in USP 4,574,133.

The hydrolyzable silane monomer may include silane monomers that comprise an ethylenically unsaturated hydrocarbyl group, such as a vinyl, allyl, isopropenyl, butenyl, cyclohexenyl or gamma (meth)acryloxy allyl group, and a hydrolyzable group, such as, for example, a hydrocarbyloxy, hydrocarbonyloxy, or hydrocarbylamino group. Hydrolyzable groups may include methoxy, ethoxy, formyloxy, acetoxy, proprionyloxy, and alkyl or arylamino groups. In a specific example, the hydrolyzable silane monomer is an unsaturated alkoxy silane, which can be grafted onto the polyolefin or copolymerized in-reactor with an $\alpha$-olefin (such as ethylene). Examples of hydrolyzable silane monomers include vinyltrimethoxysilane (VTMS), vinyltriethoxysilane (VTES), vinyltriacetoxysilane, and gamma-(meth)acryloxy propyl trimethoxy silane. In context to Structure (I), for VTMS: x = 0; $R^1$ = hydrogen; and $R^2$ = methoxy; for VTES: x = 0; $R^1$ = hydrogen; and $R^2$ = ethoxy; and for vinyltriacetoxysilane: x = 0; $R^1$ = H; and $R^2$ = acetoxy.

Examples of suitable ethylene/silane copolymers are commercially available as SI-LINKT^M DFDA-5451 NT and SI-LINK™ AC DFDB-5451 NT, each available from The Dow Chemical Company, Midland, MI. Examples of suitable Si-g-PO are commercially available as PEXIDAN™ A-3001 from SACO AEI Polymers, Shebyogan, WI and SYNCURE™ S1054A from PolyOne, Avon Lake, OH.

The polymeric composition may comprise from 20 wt% to 80 wt% of silane-functionalized polyolefin. The polymeric composition may comprise 20 wt% or greater, or 22 wt% or greater, or 24 wt% or greater, or 26 wt% or greater, or 28 wt% or greater, or 30 wt% or greater, or 32 wt% or greater, or 34 wt% or greater, or 36 wt% or greater, or 38 wt% or greater, or 40 wt% or greater, or 42 wt% or greater, or 44 wt% or greater, or 46 wt% or greater, or 48 wt% or greater, or 50 wt% or greater, or 52 wt% or greater, or 54 wt% or greater, or 56 wt% or greater, or 58 wt% or greater, or 60 wt% or greater, or 65 wt% or greater, or 70 wt% or greater, or 75 wt% or greater, while at the same time, 80 wt% or less, or 75 wt% or less, or 70 wt% or less, or 65 wt% or less, or 60 wt% or less, or 58 wt% or less, or 56 wt% or less, or 54 wt% or less, or 52 wt% or less, or 40 wt% or less, or 48 wt% or less, or 46 wt% or less, or 44 wt% or less, or 42 wt% or less, or 40 wt% or less, or 38 wt% or less, or 36 wt% or less, or 34 wt% or less, or 32 wt% or less, or 30 wt% or less, or 28 wt% or less, or 26 wt% or less, or 24 wt% or less, or 22 wt% or less of silane-functionalized polyolefin based on a total weight of the polymeric composition.

The silane-functionalized polyolefin has a melt index as measured according to ASTM D1238 under the conditions of 190°C/2.16 kilogram (kg) weight and is reported in grams eluted per 10 minutes (g/10 min). The melt index of the silane functionalized polyolefin may be 0.5 g/10 min or greater, or 1.0 g/10 min or greater, or 1.5 g/10 min or greater, or 2.0 g/10 min or greater, or 2.5 g/10 min or greater, or 3.0 g/10 min or greater, or 3.5 g/10 min or greater, or 4.0 g/10 min or greater, or 4.5 g/10 min or greater, while at the same time, 30.0 g/10 min or less, or 25.0 g/10 min or less, or 20.0 g/10 min or less, or 15.0 g/10 min or less, or 10.0 g/10 min or less, or 5.0 g/10 min or less, or 4.5 g/10 min or less, or 4.0 g/10 min or less, or 3.5 g/10 min or less, or 3.0 g/10 min or less, or 2.5 g/10 min or less, or 2.0 g/10 min or less, or 1.5 g/10 min or less, or 1.0 g/10 min or less.

*Brominated Flame Retardant*

The polymeric composition comprises a brominated flame retardant. The brominated flame retardant may have a Temperature of 5% Mass Loss from 350°C to 500°C as measured according to Thermogravimetric Analysis as explained

below. The Temperature of 5% Mass Loss may be 350°C or greater, or 360°C or greater, or 370°C or greater, or 380°C or greater, or 390°C or greater, or 400°C or greater, or 410°C or greater, or 420°C or greater, or 430°C or greater, or 440°C or greater, or 450°C or greater, or 460°C or greater, or 470°C or greater, or 480°C or greater, or 490°C or greater, while at the same time, 500°C or less, or 490°C or less, or 480°C or less, or 470°C or less, or 460°C or less, or 450°C or less, or 440°C or less, or 430°C or less, or 420°C or less, or 410°C or less, or 400°C or less, or 390°C or less, or 380°C or less, or 370°C or less, or 360°C or less as measured according to Thermogravimetric Analysis. The Temperature of 5% Mass Loss is correlated with dehydrobromination of the brominated flame retardant. Premature dehydrobromination negatively affects the flame retardancy, as does too late dehydrobromination, and as such having a Temperature of 5% Mass Loss from 350°C to 500°C is advantageous in increasing flame retardancy.

The brominated flame retardant has a Retained Mass at 650°C of 2 wt% to 50 wt% as measured according to Thermogravimetric Analysis as explained below. The brominated flame retardant may have a Retained Mass at 650°C of 2 wt% or greater, or 5 wt% or greater, or 10 wt% or greater, or 13 wt% or greater, or 15 wt% or greater, or 18 wt% or greater, or 20 wt% or greater, or 25 wt% or greater, or 30 wt% or greater, or 35 wt% or greater, or 40 wt% or greater, or 45 wt% or greater, while at the same time, 50 wt% or less, or 45 wt% or less, or 40 wt% or less, or 35 wt% or less, or 30 wt% or less, or 25 wt% or less, or 20 wt% or less, or 18 wt% or less, or 15 wt% or less, or 13 wt% or less, or 10 wt% or less, or 5 wt% or less. The Retained Mass at 650°C is an indication of the brominated flame retardant's sole ability to form char, which is often a carbonaceous material that insulates the material being protected, slowing pyrolysis and creating a barrier that hinders diffusion of oxygen/air as well as the release of additional gases to fuel combustion. Thus, in terms of the well-known fire triangle, the formation of char is advantageous as it both reduces heat transmission in addition to reducing oxygen contact with the polymeric composition.

The brominated flame retardant may comprise ethylene bis-tetrabromophthalimide. Ethylene bis-tetrabromophthalimide has a CAS number of 32588-76-4 and is commercially available under the tradename SAYTEX™ BT-93W from Albemarle, Charlotte, North Carolina, USA. The polymeric composition may comprise 5 wt% or greater, 10 wt% or greater, 11 wt% or greater, or 13 wt% or greater, or 15 wt% or greater, or 20 wt% or greater, or 25 wt% or greater, or 30 wt% or greater, or 31 wt% or greater, or 32 wt% or greater, or 33 wt% or greater, or 34 wt% or greater, or 35 wt% or greater, or 36 wt% or greater, or 37 wt% or greater, or 38 wt% or greater, or 39 wt% or greater, or 40 wt% or greater, or 41 wt% or greater, or 42 wt% or greater, or 43 wt% or greater, or 44 wt% or greater, while at the same time, 45 wt% or less, or 44 wt% or less, or 43 wt% or less, or 42 wt% or less, or 41 wt% or less, or 40 wt% or less, or 39 wt% or less, or 38 wt% or less, or 37 wt% or less, or 36 wt% or less, or 35 wt% or less, or 34 wt% or less, or 33 wt% or less, or 32 wt% or less, or 31 wt% or less, or 30 wt% or less, or 25 wt% or less, or 20 wt% or less, or 15 wt% or less, or 13 wt% or less, or 11 wt% or less, or 10 wt% or less of ethylene bis-tetrabromophthalimide based on a total weight of the polymeric composition. Ethylene bis-tetrabromophthalimide has a bromine content of 67.2 wt%.

### *Zinc Flame Retardant Synergist*

The polymeric composition comprises a zinc flame retardant synergist. As used herein, a "zinc flame retardant synergist" is a compound that increases the flame retardancy properties of a flame retardant and comprises the element zinc. The zinc flame retardant synergist may be selected from the group consisting of zinc borate, zinc carbonate, zinc carbonate hydroxide, hydrated zinc borate, zinc phosphate, zinc stannate, zinc hydrostannate, zinc sulfide, zinc oxide and combinations thereof. One example of a zinc flame retardant synergist is commercially available as FIREBRAKE™ ZB-fine from Rio Tinto, London, England.

The polymeric composition may comprise 0.5 wt% or greater, or 1 wt% or greater, or 2 wt% or greater, or 3 wt% or greater, or 4 wt% or greater, or 5 wt% or greater, or 6 wt% or greater, or 7 wt% or greater, or 8 wt% or greater, or 9 wt% or greater, or 10 wt% or greater, or 11 wt% or greater, or 12 wt% or greater, or 13 wt% or greater, or 14 wt% or greater, while at the same time, 15 wt% or less, or 14 wt% or less, or 13 wt% or less, or 12 wt% or less, or 11 wt% or less, or 10 wt% or less, or 9 wt% or less, or 8 wt% or less, or 7 wt% or less, or 6 wt% or less, or 5 wt% or less, or 4 wt% or less, or 3 wt% or less, or 2 wt% or less, or 1 wt% or less of the zinc flame retardant synergist.

As explained above, the polymeric composition is free of antimony trioxide. Further, the polymeric composition may be free of antimony. As used herein, the term "free of" is defined to mean that the polymeric composition comprises less than 0.1 wt% of the element or compound of which it is free of based on a total weight of the polymeric composition. The absence of antimony trioxide in the polymeric composition is surprising in that coated conductors comprising conventional polymeric compositions need antimony trioxide or both antimony trioxide and a zinc flame retardant synergist to pass the VW-1 Burn Test, however coated conductors utilizing the polymeric composition of the present disclosure are free of antimony and can pass the VW-1 Burn Test.

### *Second Polyolefin*

The polymeric composition may include an optional second polyolefin. As with the silane functionalized polyolefin, the second olefin comprises polymerized α-olefins and optionally unsaturated esters. The α-olefin may include $C_2$, or $C_3$ to $C_4$, or $C_6$, or $C_8$, or $C_{10}$, or $C_{12}$, or $C_{16}$, or $C_{18}$, or $C_{20}$ α-olefins, such as ethylene, propylene, 1-butene, 1-hexene, 4-methyl-1-pentene, and 1-octene. The unsaturated esters can be alkyl acrylates, alkyl methacrylates, or vinyl carboxylates. The second polyolefin may not be silane functionalized. The second polyolefin may have a crystallinity at 23°C from 0 wt% to 80 wt% as measured according to Crystallinity Testing as provided below. For example, the crystallinity at 23°C of the second polyolefin may be 0 wt% or greater, or 5 wt% or greater, or 10 wt% or greater, or 15 wt% or greater, or 20 wt% or greater, or 25 wt% or greater, or 30 wt% or greater, or 35 wt% or greater, or 40 wt% or greater, or 45 wt% or greater, or 50 wt% or greater, or 55 wt% or greater, or 60 wt% or greater, or 65 wt% or greater, or 70 wt% or greater, or 75 wt% or greater, while at the same time, 80 wt% or less, or 75 wt% or less, or 70 wt% or less, or 65 wt% or less, or 60 wt% or less, or 55 wt% or less, or 50 wt% or less, or 45 wt% or less, or 40 wt% or less, or 35 wt% or less, or 30 wt% or less, or 25 wt% or less, or 20 wt% or less, or 15 wt% or less, or 10 wt% or less as measured according to Crystallinity Testing.

The second polyolefin may be an ultra-low-density polyethylene or a linear low-density polyethylene or a high density polyethylene or an ethylene ethyl acrylate copolymer or an ethylene vinyl acetate copolymer. The density of the second polyolefin may be 0.860 g/cc or greater, 0.870 g/cc or greater, or 0.880 g/cc or greater, or 0.890 g/cc or greater, or 0.900 g/cc or greater, or 0.904 g/cc or greater, or 0.910 g/cc or greater, or 0.915 g/cc or greater, or 0.920 g/cc or greater, or 0.921 g/cc or greater, or 0.922 g/cc or greater, or 0.925 g/cc to 0.930 g/cc or greater, or 0.935 g/cc or greater, while at the same time, 0.970 g/cc or less, or 0.960 g/cc or less, or 0.950 g/cc or less, or 0.940 g/cc or less, or 0.935 g/cc or less, or 0.930 g/cc or less, or 0.925 g/cc or less, or 0.920 g/cc or less, or 0.915 g/cc or less, or 0.910 g/cc or less, or 0.905 g/cc or less, or 0.900 g/cc or less as measured by ASTM D792.

The second polyolefin has a melt index as measured according to ASTM D1238 under the conditions of 190°C/2.16 kilogram (kg) weight and is reported in grams eluted per 10 minutes (g/10 min). The melt index of the silane functionalized polyolefin may be 0.5 g/lOmin or greater, or 1.0 g/lOmin or greater, or 1.5 g/lOmin or greater, or 2.0 g/lOmin or greater, or 2.5 g/lOmin or greater, or 3.0 g/lOmin or greater, or 3.5 g/lOmin or greater, or 4.0 g/lOmin or greater, or 4.5 g/lOmin or greater, while at the same time, 30.0 g/10 min or less, or 25.0 g/10 min or less, or 20.0 g/10 min or less, or 15.0 g/10 min or less, or 10.0 g/10 min or less, or 5.0 g/lOmin or less, or 4.5 g/lOmin or less, or 4.0 g/lOmin or less, or 3.5 g/lOmin or less, or 3.0 g/lOmin or less, or 2.5 g/lOmin or less, or 2.0 g/lOmin or less, or 1.5 g/lOmin or less, or 1.0 g/lOmin or less.

The polymeric composition may comprise from 0 wt% to 30 wt% of second polyolefin based on the total weight of the polymeric composition. The polymeric composition may comprise 0 wt% or greater, or 5 wt% or greater, or 10 wt% or greater, or 15 wt% or greater, or 20 wt% or greater, or 25 wt% or greater, while at the same time, 30 wt% or less, or 25 wt% or less, or 20 wt% or less, or 15 wt% or less, or 10 wt% of the second polyolefin.

*Additives*

The polymeric composition may include one or more additives. Nonlimiting examples of suitable additives include antioxidants, colorants, corrosion inhibitors, lubricants, silanol condensation catalysts, ultraviolet (UV) absorbers or stabilizers, anti-blocking agents, flame retardants, coupling agents, compatibilizers, plasticizers, fillers, processing aids, and combinations thereof.

The polymeric composition may include an antioxidant. Nonlimiting examples of suitable antioxidants include phenolic antioxidants, thio-based antioxidants, phosphate-based antioxidants, and hydrazine-based metal deactivators. Suitable phenolic antioxidants include high molecular weight hindered phenols, methyl-substituted phenol, phenols having substituents with primary or secondary carbonyls, and multifunctional phenols such as sulfur and phosphorous-containing phenol. Representative hindered phenols include 1,3,5-trimethyl-2,4,6-tris-(3,5-di-tert-butyl-4-hydroxybenzyl)-benzene; pentaerythrityl tetrakis-3(3,5-di-tert-butyl-4-hydroxyphenyl)-propionate; n-octadecyl-3(3,5-di-tert-butyl-4-hydroxyphenyl)-propionate; 4,4'-methylenebis(2,6-tert-butyl-phenol); 4,4'-thiobis(6-tert-butyl-o-cresol); 2,6-di-tertbutylphenol; 6-(4-hydroxyphenoxy)-2,4-bis(n-octyl-thio)-1,3,5 triazine; di-n-octylthio)ethyl 3,5-di-tert-butyl-4-hydroxy-benzoate; and sorbitol hexa[3-(3,5-di-tert-butyl-4-hydroxy-phenyl)-propionate]. In an embodiment, the composition includes pentaerythritol tetrakis(3-(3,5-di-tert-butyl-4-hydroxyphenyl)propionate), commercially available as Irganox™ 1010 from BASF. A nonlimiting example of a suitable methyl-substituted phenol is isobutylidenebis(4,6-dimethylphenol). A nonlimiting example of a suitable hydrazine-based metal deactivator is oxalyl bis(benzylidiene hydrazide). In an embodiment, the composition contains from 0 wt%, or 0.001 wt%, or 0.01 wt%, or 0.02 wt%, or 0.05 wt%, or 0.1 wt%, or 0.2 wt %, or 0.3 wt %, or 0.4 wt% to 0.5 wt%, or 0.6 wt %, or 0.7 wt%, or 0.8 wt %, or 1.0 wt %, or 2.0 wt%, or 2.5 wt%, or 3.0 wt% antioxidant, based on total weight of the composition.

The polymeric composition may include a silanol condensation catalyst, such as Lewis and Brønsted acids and bases. A "silanol condensation catalyst" promotes crosslinking of the silane functionalized polyolefin through hydrolysis and condensation reactions. Lewis acids are chemical species that can accept an electron pair from a Lewis base. Lewis bases are chemical species that can donate an electron pair to a Lewis acid. Nonlimiting examples of

suitable Lewis acids include the tin carboxylates such as dibutyl tin dilaurate (DBTDL), dimethyl hydroxy tin oleate, dioctyl tin maleate, di-n-butyl tin maleate, dibutyl tin diacetate, dibutyl tin dioctoate, stannous acetate, stannous octoate, and various other organo-metal compounds such as lead naphthenate, zinc caprylate and cobalt naphthenate. Nonlimiting examples of suitable Lewis bases include the primary, secondary and tertiary amines. Nonlimiting examples of suitable Brønsted acids are methanesulfonic acid, benzenesulfonic acid, dodecylbenzenesulfonic acid, naphthalenesulfonic acid, or an alkylnaphthalenesulfonic acid. The silanol condensation catalyst may comprise a blocked sulfonic acid. The blocked sulfonic acid may be as defined in US 2016/0251535 A1 and may be a compound that generates in-situ a sulfonic acid upon heating thereof, optionally in the presence of moisture or an alcohol. Examples of blocked sulfonic acids include amine-sulfonic acid salts and sulfonic acid alkyl esters. The blocked sulfonic acid may consist of carbon atoms, hydrogen atoms, one sulfur atom, and three oxygen atoms, and optionally a nitrogen atom. These catalysts are typically used in moisture cure applications. The polymeric composition includes from 0 wt%, or 0.001 wt%, or 0.005 wt%, or 0.01 wt%, or 0.02 wt%, or 0.03 wt% to 0.05 wt%, or 0.1 wt%, or 0.2 wt%, or 0.5 wt%, or 1.0 wt%, or 3.0 wt%, or 5.0 wt% silanol condensation catalyst, based on the total weight of the composition. The silanol condensation catalyst is typically added to the article manufacturing-extruder (such as during cable manufacture) so that it is present during the final melt extrusion process. As such, the silane functionalized polyolefin may experience some crosslinking before it leaves the extruder with the completion of the crosslinking after it has left the extruder, typically upon exposure to moisture (e.g., a sauna, hot water bath or a cooling bath) and/or the humidity present in the environment in which it is stored, transported or used.

The silanol condensation catalyst may be included in a catalyst masterbatch blend with the catalyst masterbatch being included in the composition. Nonlimiting examples of suitable catalyst masterbatches include those sold under the trade name SI-LINK™ from The Dow Chemical Company, including SI-LINK™ DFDA-5481 Natural and SI-LINKT$^M$ AC DFDA-5488 NT. In an embodiment, the composition contains from 0 wt%, or 0.001 wt%, or 0.01 wt%, or 0.5 wt%, or 1.0 wt%, or 2.0 wt%, or 3.0 wt%, or 4.0 wt% to 5.0 wt%, or 6.0 wt%, or 7.0 wt%, or 8.0 wt%, or 9.0 wt%, or 10.0 wt%, or 15.0 wt%, or 20.0 wt% catalyst masterbatch, based on total weight of the composition.

The polymeric composition may include an ultraviolet (UV) absorber or stabilizer. A nonlimiting example of a suitable UV stabilizer is a hindered amine light stabilizer (HALS). A nonlimiting example of a suitable HALS is 1,3,5-Triazine-2,4,6-triamine, N,N-1,2-ethanediylbisN-3-4,6-bisbutyl(1,2,2,6,6-pentamethyl-4-piperidinyl)amino-1,3,5-triazin-2-ylaminopropyl-N,N-dibutyl-N,N-bis(1,2,2,6,6-pentamethyl-4-piperidinyl)-1,5,8,12-tetrakis[4,6-bis(n-butyl-n-1,2,2,6,6-pentamethyl-4-piperidylamino)-1,3,5-triazin-2-yl]-1,5,8,12-tetraazadodecane, which is commercially available as SABO™ STAB UV-119 from SABO S.p.A. of Levate, Italy. In an embodiment, the composition contains from 0 wt%, or 0.001 wt%, or 0.002 wt%, or 0.005 wt%, or 0.006 wt% to 0.007 wt%, or 0.008 wt%, or 0.009 wt%, or 0.01 wt%, or 0.2 wt %, or 0.3 wt %, or 0.4 wt%, or 0.5 wt%, 1.0 wt %, or 2.0 wt%, or 2.5 wt%, or 3.0 wt% UV absorber or stabilizer, based on total weight of the composition.

The polymeric composition may include a filler. Nonlimiting examples of suitable fillers include, carbon black, organo-clay, aluminum trihydroxide, magnesium hydroxide, calcium carbonate, hydromagnesite, huntite, hydrotalcite, boehmite, magnesium carbonate, magnesium phosphate, calcium hydroxide, calcium sulfate, silica, silicone gum, talc and combinations thereof. The filler may or may not have flame retardant properties. In an embodiment, the filler is coated with a material that will prevent or retard any tendency that the filler might otherwise have to interfere with the silane cure reaction. Stearic acid is illustrative of such a filler coating. In an embodiment, the composition contains from 0 wt%, or 0.01 wt%, or 0.02 wt%, or 0.05 wt%, or 0.07 wt%, or 0.1 wt%, or 0.2 wt %, or 0.3 wt %, or 0.4 wt% to 0.5 wt%, or 0.6 wt %, or 0.7 wt%, or 0.8 wt %, or 1.0 wt %, or 2.0 wt%, or 2.5 wt%, or 3.0 wt%, or 5.0 wt%, or 8.0 wt%, or 10.0 wt%, or 20 wt% filler, based on total weight of the polymeric composition.

In an embodiment, the composition includes a processing aid. Nonlimiting examples of suitable processing aids include oils, polydimethylsiloxane, organic acids (such as stearic acid), and metal salts of organic acids (such as zinc stearate). In an embodiment, the composition contains from 0 wt%, or 0.01 wt%, or 0.02 wt%, or 0.05 wt%, or 0.07 wt%, or 0.1 wt%, or 0.2 wt %, or 0.3 wt %, or 0.4 wt% to 0.5 wt%, or 0.6 wt %, or 0.7 wt%, or 0.8 wt %, or 1.0 wt %, or 2.0 wt%, or 2.5 wt%, or 3.0 wt%, or 5.0 wt%, or 10.0 wt% processing aid, based on total weight of the composition.

In an embodiment, the composition contains from 0 wt%, or greater than 0 wt%, or 0.001 wt%, or 0.002 wt%, or 0.005 wt%, or 0.006 wt% to 0.007 wt%, or 0.008 wt%, or 0.009 wt%, or 0.01 wt%, or 0.2 wt %, or 0.3 wt %, or 0.4 wt%, or 0.5 wt%, 1.0 wt %, or 2.0 wt%, or 2.5 wt%, or 3.0 wt%, or 4.0 wt%, or 5.0 wt% to 6.0 wt%, or 7.0 wt%, or 8.0 wt%, or 9.0 wt%, or 10.0 wt%, or 15.0 wt%, or 20.0 wt%, or 30 wt%, or 40 wt%, or 50 wt% additive, based on the total weight of the composition.

One or more of the brominated flame retardant, zinc flame retardant synergists and the additives may be combined as a pre-mixed masterbatch. Such masterbatches are commonly formed by dispersing the brominated flame retardant, zinc flame retardant synergists and/or additives into an inert plastic resin, e.g., a low density polyethylene. Masterbatches are conveniently formed by melt compounding methods.

One or more of the components or masterbatches may be dried before compounding or extrusion, or a mixture of components or masterbatches is dried after compounding or extrusion, to reduce or eliminate potential scorch that may be caused from moisture present in or associated with the component, e.g., filler. The compositions may be prepared

in the absence of a silanol condensation catalyst for extended shelf life, and the silanol condensation catalyst may be added as a final step in the preparation of a cable construction by extrusion processes.

*Zn:Br molar ratio*

The polymeric composition contains zinc flame retardant synergists and brominated filler in such relative quantities that the zinc (Zn) and bromine (Br) at a molar ratio (Zn:Br molar ratio) from greater than 0.0 to 0.160. For example, the Zn:Br molar ratio may be 0.010 or greater, or 0.020 or greater, or 0.030 or greater, or 0.040 or greater, or 0.050 or greater, or 0.060 or greater, or 0.070 or greater, or 0.080 or greater, or 0.090 or greater, or 0.100 or greater, or 0.110 or greater, or 0.120 or greater, or 0.130 or greater, or 0.140 or greater, or 0.150 or greater, while at the same time, 0.160 or less, or 0.150 or less, or 0.140 or less, or 0.130 or less, or 0.120 or less, or 0.110 or less, or 0.100 or less, or 0.090 or less, or 0.080 or less, or 0.070 or less, or 0.060 or less, or 0.050 or less, or 0.040 or less, or 0.030 or less, or 0.020 or less, or 0.010 or less. The Zn:Br molar ratio is calculated in accordance with the following Equation (1):

$$Zn\colon Br\ molar\ ratio = \frac{moles\ of\ zinc\ in\ polymeric\ composition}{moles\ of\ bromine\ in\ polymeric\ composition} \qquad \text{Eq. (1)}$$

The number of moles of bromine in the polymeric composition from the brominated flame retardant is calculated in accordance with the following Equation (1A):

$$moles\ of\ bromine\ in\ \text{polymeric}\ composition = \frac{(grams\ of\ bromine\ in\ composition)}{\text{atomic weight of bromine}} \qquad \text{Eq. (1A).}$$

wherein, the atomic weight of bromine is 79.904 g/mol.

The number of moles of zinc in the polymeric composition from the zinc flame retardant synergist is calculated in accordance with the following Equation (1B):

$$moles\ of\ zinc\ in\ \text{polymeric}\ composition = \frac{(grams\ of\ zinc\ in\ composition)}{\text{atomic weight of zinc}} \qquad \text{Eq. (1B).}$$

wherein, the atomic weight of zinc is 65.38 g/mol.

The grams of bromine within the polymeric composition can readily be determined from the amount of brominated flame retardant in the polymeric composition and the amount of bromine in the brominated flame retardant. The grams of zinc within the polymeric composition can readily be determined from the amount of zinc flame retardant synergist in the polymeric composition and the amount of zinc in the zinc flame retardant synergist.

*Coated Conductor*

The present disclosure also provides a coated conductor. The coated conductor includes a conductor and a coating on the conductor, the coating including the polymeric composition. The polymeric composition is at least partially disposed around the conductor to produce the coated conductor.

The process for producing a coated conductor includes mixing and heating the polymeric composition to at least the melting temperature of the silane functionalized polyolefin in an extruder, and then coating the polymeric melt blend onto the conductor. The term "onto" includes direct contact or indirect contact between the polymeric melt blend and the conductor. The polymeric melt blend is in an extrudable state.

The polymeric composition is disposed around on and/or around the conductor to form a coating. The coating may be one or more inner layers such as an insulating layer. The coating may wholly or partially cover or otherwise surround or encase the conductor. The coating may be the sole component surrounding the conductor. Alternatively, the coating may be one layer of a multilayer jacket or sheath encasing the metal conductor. The coating may directly contact the conductor. The coating may directly contact an insulation layer surrounding the conductor.

The resulting coated conductor (cable) is cured at humid conditions for a sufficient length of time such that the coating reaches a desired degree of crosslinking. The temperature during cure is generally above 0°C. In an embodiment, the cable is cured (aged) for at least 4 hours in a 90°C water bath. In an embodiment, the cable is cured (aged) for up to 30 days at ambient conditions comprising an air atmosphere, ambient temperature (e.g., 20°C to 40°C), and ambient relative humidity (e.g., 10 to 96 percent relative humidity (% RH)).

The coated conductor may pass a Horizontal Burn Test. To pass the Horizontal Burn Test, the coated conductor must have a total char of less than 100 mm and the cotton placed underneath must not ignite. A time to self-extinguish

of less than 80 seconds is desirable. The coated conductor may have a total char during the horizontal burn test from 0 mm, or 5 mm, or 10 mm to 50 mm, or 55 mm, or 60 mm, or 70 mm, or 75 mm, or 80 mm, or 90 mm, or less than 100 mm. The coated conductor may have a time to self-extinguish during the Horizontal Burn Test from 0 seconds, or 5 seconds, or 10 seconds to 30 seconds, or 35 seconds, or 40 seconds, or 50 seconds, or 60 seconds, or 70 seconds, or less than 80 seconds.

The coated conductor may pass a VW-1 Burn Test. To pass the VW-1 Burn Test and thus have a VW-1 rating, the coated conductor must self-extinguish within 60 seconds (≤ 60 seconds) of the removal of a burner for each of five 15-second flame impingement cycles, exhibit ≤ 25% flag burn, and exhibit no cotton burn. In an embodiment, the coated conductor has a time to self-extinguish during the VW-1 Burn Test from 0 seconds to 20 seconds, or 30 seconds, or 40 seconds, or 50 seconds, or 60 seconds, or less than 60 seconds during each of the 5 individual cycles. In an embodiment, the coated conductor has a no char to flag length during the VW-1 Burn Test from 20 mm, or 40 mm, or 50 mm, or 75 mm to 100 mm, or 110 mm, or 120 mm, or 130 mm, or 140 mm, or 150 mm, or 160 mm, or 180 mm, or 200 mm, or 250 mm, or 300 mm, or 350 mm, or 400 mm, or 500 mm, or 508 mm.

The coated conductor has one, some, or all of the following properties: (i) a total char during the horizontal burn test from 0 mm to less than 100 mm; (ii) a time to self-extinguish during the horizontal burn test from 0 seconds to less than 80 seconds; (iii) a time to self-extinguish during the VW-1 test from 0 seconds to less than 60 seconds during each of the 5 individual cycles. The coated conductor may pass the Horizontal Burn Test and/or the VW-1 Burn Test.

## Examples

### *Test Methods*

*Density*: Density is measured in accordance with ASTM D792, Method B. The result is recorded in grams (g) per cubic centimeter (g/cc).

*Melt Index*: Melt index (MI) is measured in accordance with ASTM D1238, Condition 190°C/2.16 kilogram (kg) weight and is reported in grams eluted per 10 minutes (g/10 min).

*Thermogravimetric Analysis*: Thermogravimetric Analysis testing is performed using a Q5000 thermogravimetric analyzer from TA INSTRUMENTS™. Perform Thermogravimetric Analysis testing by placing a sample of the material in the thermogravimetric analyzer on platinum pans under nitrogen at flow rate of 100 $cm^3$/minute and, after equilibrating at 40°C, raising the temperature from 40°C to 650°C at a rate of 20°C/minute while measuring the mass of the sample. From the curve of data generated associating a temperature with a % of mass remaining, determine the temperature at which 5% of the mass of the sample was lost to get the Temperature of 5% Mass Loss. From the curve of data generated associating a temperature with a % of mass remaining, determine the mass% of the sample remaining when the Thermogravimetric Analysis reaches 650°C to get the Retained Mass at 650°C.

*Crystallinity Testing:* determine melting peaks and percent (%) or weight percent (wt%) crystallinity of ethylene-based polymers at 23°C using Differential Scanning Calorimeter (DSC) instrument DSC Q1000 (TA Instruments). (A) Baseline calibrate DSC instrument. Use software calibration wizard. Obtain a baseline by heating a cell from -80° to 280° C. without any sample in an aluminum DSC pan. Then use sapphire standards as instructed by the calibration wizard. Analyze 1 to 2 milligrams (mg) of a fresh indium sample by heating the standards sample to 180°C, cooling to 120°C at a cooling rate of 10°C/minute, then keeping the standards sample isothermally at 120°C for 1 minute, followed by heating the standards sample from 120°C to 180°C at a heating rate of 10°C/minute. Determine that indium standards sample has heat of fusion = 28.71 ± 0.50 Joules per gram (J/g) and onset of melting = 156.6° ± 0.5°C (B) Perform DSC measurements on test samples using the baseline calibrated DSC instrument. Press test sample of semi-crystalline ethylenic polymer into a thin film at a temperature of 160°C. Weigh 5 to 8 mg of test sample film in aluminum DSC pan. Crimp lid on pan to seal pan and ensure closed atmosphere. Place lid-sealed pan in DSC cell, equilibrate cell at 30°C, and then heat at a rate of about 100° C/minute to 190°C, keep sample at 190°C for 3 minutes, cool sample at a rate of 10°C/minute to -60°C to obtain a cool curve heat of fusion ($H_f$), and keep isothermally at -60°C for 3 minutes. Then heat sample again at a rate of 10°C/minute to 190°C to obtain a second heating curve heat of fusion ($\Delta H_f$). Using the second heating curve, calculate the "total" heat of fusion (J/g) by integrating from -20°C (in the case of ethylene homopolymers, copolymers of ethylene and hydrolysable silane monomers, and ethylene alpha olefin copolymers of density greater than or equal to 0.90g/$cm^3$) or -40°C (in the case of copolymers of ethylene and unsaturated esters, and ethylene alpha olefin copolymers of density less than 0.90g/$cm^3$) to end of melting. Using the second heating curve, calculate the "room temperature" heat of fusion (J/g) from 23°C (room temperature) to end of melting by dropping perpendicular at 23°C. Measure and report "total crystallinity" (computed from "total" heat of fusion) as well as "Crystallinity at room temperature" (computed from 23°C heat of fusion). Crystallinity is measured and reported as percent (%) or weight percent (wt%) crystallinity of the polymer from the test sample's second heating curve heat of fusion ($\Delta H_f$) and its normalization to the heat of fusion of 100% crystalline polyethylene, where % crystallinity or wt% crystallinity = ($\Delta H_f$*100%)/292 J/g, wherein $\Delta H_f$ is as defined above, * indicates mathematical multiplication, / indicates mathematical division, and 292 J/g is a

literature value of heat of fusion ($\Delta H_f$) for a 100% crystalline polyethylene.

*VW-1 Burn Test:* The VW-1 Burn Test is conducted by subjecting three samples of a specific coated conductor to the protocol of UL 2556 Section 9.4. This involves five 15-second applications of a 125 mm flame impinging on at an angle 20° on a vertically oriented specimen 610 mm (24 in) in length. A strip of kraft paper 12.5 ± 1 mm (0.5 ± 0.1 in) is affixed to the specimen 254 ± 2 mm (10 ± 0.1 in) above the impingement point of the flame. A continuous horizontal layer of cotton is placed on the floor of the test chamber, centered on the vertical axis of the test specimen, with the upper surface of the cotton being 235 ± 6 mm (9.25 ± 0.25 in) below the point at which the tip of the blue inner cone of the flame impinges on the specimen. Test failure is based upon the criteria of either burning the 25% of the kraft paper tape flag, ignition of the cotton batting or if the specimen burns longer than 60 seconds on any of the five flame applications. As an additional measure of burn performance, the length of uncharred insulation ("no char to flag length") is measured at the completion of the test. The self-extinguishment time of the 3-5 specimens and 5 cycles is averaged to determine the "VW-1 Average Time to Self-Extinguish" provided in Table 2. The VW-1 cotton ignited indicates if falling material ignited the cotton bed.

*Horizontal Burn Test:* The Horizontal Burn Test is conducted in accordance with UL-2556. The test is performed by placing the coated conductor in a horizontal position. Cotton is placed underneath the coated conductor. A burner is set at a 20° angle relative to the horizontal sample (14 AWG copper wire with 30 mil coating wall thickness). A one-time flame is applied to the middle of the sample for 30 seconds. The sample fails when (i) the cotton ignites and/or (ii) the sample chars in excess of 100 mm. Char length is measured in accordance with UL-1581, 1100.4.

*Moles of Zinc:* The moles of zinc in the polymeric composition from the below noted FIREBRAKE™ ZB-Fine zinc borate is calculated in accordance with the following Equation (2):

$$moles\ of\ zinc\ in\ \text{polymeric}\ composition =$$

$$\left(\frac{grams\ of FIREBRAKE\ ZB\text{−}Fine\ in\ composition}{molecular\ weight\ of\ zinc\ borate}\right) \text{x}\ \frac{(purity\ of\ FIREBRAKE\ ZB\text{−}Fine)}{100} \text{x}\ (relative\ mole\ ratio\ of\ zinc\ to\ zinc\ borate) \quad \text{Eq. (2).}$$

wherein, the molecular weight of FIREBRAKE™ ZB-Fine (zinc borate = $2ZnO \cdot 3B_2O_3 \cdot 3.5H_2O$) is 434.66 g/mol, purity of FIREBRAKE™ ZB-FINE is greater than 98.8% based on its safety data sheet and the relative mole ratio of zinc to zinc borate is 2.

## Materials

The materials used in the examples are provided below.

Silane Functionalized Polyolefin is an ethylene/silane copolymer having a density of 0.922 g/cc, a crystallinity at 23°C of 46.9 wt% and a melt index of 1.5 g/10 min (190°C/2.16 kg) and is commercially available as SI-LINK™ DFDA-5451 NT from The Dow Chemical Company, Midland, Michigan. Silane Functionalized Polyolefin has a Temperature of 5% Mass Loss of 425°C as measured according to Thermogravimetric Analysis (except for a rate of 10°C/minute, instead of rate of 20°C/minute used with the brominated FR). Silane Functionalized Polyolefin has a Retained Mass at 650°C of 0 wt% as measured according to Thermogravimetric Analysis (except for a rate of 10°C/minute, instead of rate of 20°C/minute used with the brominated FR).

ULDPE is a polyethylene resin having a density of 0.904 g/cc, a crystallinity at 23°C of 37 wt% and a melt index of 4 g/10 min (190°C/2.16 kg) and is commercially available as ATTANE™ 4404G from The Dow Chemical Company, Midland, Michigan.

Brominated FR is ethylene bis-tetrabromophthalimide and is commercially available as SAYTEX™ BT-93W from Albemarle, Charlotte North Carolina. The Brominated FR has a Temperature of 5% Mass Loss of 442°C as measured according to Thermogravimetric Analysis. The Brominated FR has a Retained Mass at 650°C of from 10 wt% to 20 wt% as measured according to Thermogravimetric Analysis.

Zn FR is 2ZnO-3 $B_2O_3 \cdot 3.5H_2O$ having a median particle diameter of 2.1 microns as measured according to laser diffraction and commercially available as FIREBRAKE™ ZB-fine from Rio Tinto, London, England.

AO is a sterically hindered phenolic antioxidant having the chemical name pentaerythritol tetrakis(3-(3,5-di-tert-butyl-4-hydroxyphenyl)propionate), which is commercially available as IRGANOX™ 1010 from BASF, Ludwigshafen, Germany.

Catalyst Masterbatch is a blend of polyolefins, phenolic compounds, and 1.7 wt% of dibutyltin dilaurate as silanol condensation catalyst.

## Sample Preparation

Prepare the samples by melt blending the materials of Table 1, except the catalyst masterbatches, in a BRABENDER™ mixer at 70 revolutions per minute for 3 minutes at a temperature between 140°C to 195°C. Press the

melt blended samples into plaques and cut the plaques into pellets. Dry the pellets in a vacuum oven for 16 hours at 70°C. Solid blend the pellets with pellets of the designated catalyst masterbatch. Melt mix the combined pellets using a ¾ inch BRABENDER™ extruder and a standard polyethylene screw with a temperature profile of 150°C/180°C/180°C/180°C. Extrude the material onto a 14 AWG solid copper wire to form cables having polymeric sheaths of 0.762 mm thickness. Cure the cables in a 90°C water bath for 16 hours.

Table 1 provides the materials used to form Comparative Examples ("CE") 1 and 2 and Inventive Example ("IE") 1. The amount of each material used is given in weight percent based on the total weight of the respective Example.

Table 1

| **Material** | **CE1** | **IE1** | **CE2** |
|---|---|---|---|
| Silane Functionalized Polyolefin | 38.80 | 38.80 | 38.80 |
| ULDPE | 14.36 | 14.36 | 14.36 |
| Brominated FR | 43.65 | 34.92 | 32.79 |
| Zn FR | 0 | 8.73 | 10.86 |
| AO | 0.19 | 0.19 | 0.19 |
| Catalyst Masterbatch | 3.00 | 3.00 | 3.00 |
| Total wt% | 100.00 | 100.00 | 100.00 |
| Zn:Br Molar Ratio | 0.0 | 0.135 | 0.179 |

*Results*

Table 2 provides results of testing of Comparative Examples 1 and 2 and Inventive Example 1.

Table 2

| Material | CE1 | IE1 | CE2 |
|---|---|---|---|
| VW-1 Average Time to Self-Extinguish (sec) | 9/13 | 28 | 15 |
| VW-1 Cotton Ignited | No | No | Yes |
| VW-1 Pass or Fail | Pass (3 of 3 specimens) | Pass (3 of 3 specimens) | Fail (Only 1 of 3 specimens did not ignite the cotton) |

As can be seen from Table 2, CE1 and IE1 were able to pass the VW-1 burn test while CE2 was not. The average time to self-extinguish for CE1 is reported as 9/13 because two sets of tests were performed, one with an average time of 9 seconds and one with an average time of 13 seconds. Such a result is surprising in that it would be expected that increasing the wt% of flame retardant synergists would increase the flame retardant properties of the polymeric composition. Rather, what has been discovered is that the zinc flame retardant synergists can be added to the polymeric composition to help offset the concentration of the relatively more expensive brominated flame retardant, but only up to a certain point after which the polymeric composition begins to fail the VW-1 burn test. Accordingly, polymeric compositions that are free of antimony trioxide and have a Zn:Br molar ratio of greater than 0.0 to 0.160 can not only pass the VW-1 burn test, but also offer a polymeric composition with a reduced manufacturing cost and less environmental impact as compared to traditional polymeric compositions. The VW-1 Burn Test is a more stringent test than the Horizontal Burn Test. As such, a coated conductor capable of passing the VW-1 Burn Test would likely pass the Horizontal Burn Test.

**Claims**

**1.** A polymeric composition comprising:

a silane functionalized polyolefin;
a brominated flame retardant having a Temperature of 5% Mass Loss from 350°C to 500°C and from 2 wt% to

50 wt% Retained Mass at 650°C, wherein the 5% Mass Loss and Retained Mass at 650°C are measured according to Thermogravimetric Analysis; and
a zinc (Zn) flame retardant synergist,
wherein the polymeric composition is free of antimony trioxide and has a zinc to bromine (Br) molar ratio (Zn:Br molar ratio) of greater than 0.0 to 0.160.

**2.** The polymeric composition of claim 1, further comprising:
0.001 wt% to 5.0 wt% of a silanol condensation catalyst based on a total weight of the polymeric composition.

**3.** The polymeric composition of any one of claims 1 and 2, further comprising:
5 wt% to 30 wt% of a second polyolefin based on a total weight of the polymeric composition, wherein the second polyolefin has a crystallinity at 23°C of from 0 wt% to 80 wt% as measured according to Crystallinity Testing.

**4.** The polymeric composition of any one of claims 1-3 wherein the brominated flame retardant comprises ethylene bis-tetrabromophthalimide.

**5.** The polymeric composition of claim 4, wherein the polymeric composition comprises from 5 wt% to 45 wt% of ethylene bis-tetrabromophthalimide based on a total weight of the polymeric composition.

**6.** The polymeric composition of any one of claims 1-5, wherein the polymeric composition comprises from 20 wt% to 80 wt% of the silane functionalized polyolefin based on a total weight of the polymeric composition.

**7.** The polymeric composition of any one of claims 1-6, wherein the zinc flame retardant synergist is selected from the group consisting of zinc borate, zinc carbonate, zinc carbonate hydroxide, hydrated zinc borate, zinc phosphate, zinc stannate, zinc hydrostannate, zinc sulfide, zinc oxide and combinations thereof.

**8.** The polymeric composition of any one of claims 1-6, wherein the Zn:Br molar ratio is from greater than 0.0 to 0.135.

**9.** A coated conductor comprising:

a conductor; and
the polymeric composition of any of claims 1-8 disposed at least partially around the conductor.

**10.** The coated conductor of claim 9, wherein the coated conductor passes a Horizontal Burn Test.

**11.** The coated conductor of any one of claims 9 and 10, wherein the coated conductor passes a VW-1 Burn Test.

## Patentansprüche

**1.** Polymerzusammensetzung, umfassend:

ein silanfunktionalisiertes Polyolefin;
ein bromiertes Flammschutzmittel mit einem Massenverlust von 5 % bei einer Temperatur von 350 °C bis 500 °C und einer Masserückhaltung von 2 bis 50 Gew.-% bei 650 °C, wobei der Massenverlust von 5 % und die Masserückhaltung bei 650 °C mittels thermogravimetrischer Analyse gemessen werden; und
einen Zink-(Zn)-Flammschutzsynergisten,
wobei die Polymerzusammensetzung frei von Antimontrioxid ist und ein Molverhältnis von Zink zu Brom (Br) (Molverhältnis Zn:Br) von größer als 0,0 bis 0,160 aufweist.

**2.** Polymerzusammensetzung nach Anspruch 1, ferner umfassend:
zu 0,001 Gew.-% bis 5,0 Gew.-% ein Silanolkondensationskatalysator bezogen auf das Gesamtgewicht der Polymerzusammensetzung.

**3.** Polymerzusammensetzung nach einem der Ansprüche 1 bis 2, ferner umfassend:
zu 5 Gew.-% bis 30 Gew.-% ein zweites Polyolefin basierend auf dem Gesamtgewicht der Polymerzusammensetzung, wobei das zweite Polyolefin eine Kristallinität bei 23 °C von 0 Gew.-% bis 80 Gew.-% aufweist, gemessen gemäß Kristallinitätstest.

4. Polymerzusammensetzung nach einem der Ansprüche 1 bis 3, wobei das bromierte Flammschutzmittel Ethylen-bis-tetrabromphthalimid umfasst.

5. Polymerzusammensetzung nach Anspruch 4, wobei die Polymerzusammensetzung von zu 5 Gew.-% bis 45 Gew.-% Ethylen-bis-tetrabromphthalimid, bezogen auf das Gesamtgewicht der Polymerzusammensetzung, umfasst.

6. Polymerzusammensetzung nach einem der Ansprüche 1 bis 5, wobei die Polymerzusammensetzung von zu 20 Gew.-% bis 80 Gew.-% das silanfunktionalisierte Polyolefin, bezogen auf ein Gesamtgewicht der Polymerzusammensetzung, umfasst.

7. Polymerzusammensetzung nach einem der Ansprüche 1 bis 6, wobei der Zink-Flammschutzsynergist aus der Gruppe ausgewählt ist, die aus Zinkborat, Zinkcarbonat, Zinkcarbonathydroxid, hydratisiertem Zinkborat, Zinkphosphat, Zinkstannat, Zinkhydrostannat, Zinksulfid, Zinkoxid und Kombinationen davon besteht.

8. Polymerzusammensetzung nach einem der Ansprüche 1 bis 6, wobei das Zn:Br-Molverhältnis größer als 0,0 bis 0,135 ist.

9. Beschichteter Leiter, umfassend:

einen Leiter; und
die Polymerzusammensetzung nach einem der Ansprüche 1 bis 8, die mindestens teilweise um den Leiter herum angeordnet ist.

10. Beschichteter Leiter nach Anspruch 9, wobei der beschichtete Leiter einen horizontalen Brenntest besteht.

11. Beschichteter Leiter nach einem der Ansprüche 9 und 10, wobei der beschichtete Leiter einen VW-1-Brenntest besteht.

## Revendications

1. Composition polymère comprenant :

une polyoléfine fonctionnalisée par silane ;
un ignifugeant bromé ayant une température de perte de masse de 5 % allant de 350 °C à 500 °C et de 2 % en poids à 50 % en poids de masse conservée à 650 °C, dans laquelle la perte de masse de 5 % et la masse conservée à 650 °C sont mesurées selon une analyse thermogravimétrique ; et
un synergiste ignifuge au zinc (Zn),
dans laquelle la composition polymère est exempte de trioxyde d'antimoine et a un rapport molaire du zinc au brome (Br) (rapport molaire Zn:Br) de plus de 0,0 à 0,160.

2. Composition polymère selon la revendication 1, comprenant en outre :
0,001 % en poids à 5,0 % en poids d'un catalyseur de condensation silanol sur la base d'un poids total de la composition polymère.

3. Composition polymère selon l'une quelconque des revendications 1 et 2, comprenant en outre :
5 % en poids à 30 % en poids d'une seconde polyoléfine sur la base d'un poids total de la composition polymère, dans laquelle la seconde polyoléfine a une cristallinité à 23 °C allant de 0 % en poids à 80 % en poids, telle que mesurée selon un test de cristallinité.

4. Composition polymère selon l'une quelconque des revendications 1 à 3, dans laquelle l'ignifugeant bromé comprend de l'éthylène bis-tétrabromophtalimide.

5. Composition polymère selon la revendication 4, dans laquelle la composition polymère comprend de 5 % en poids à 45 % en poids d'éthylène bis-tétrabromophtalimide sur la base d'un poids total de la composition polymère.

6. Composition polymère selon l'une quelconque des revendications 1 à 5, dans laquelle la composition polymère comprend de 20 % en poids à 80 % en poids de la polyoléfine fonctionnalisée par silane sur la base d'un poids total

de la composition polymère.

7. Composition polymère selon l'une quelconque des revendications 1 à 6, dans laquelle le synergiste ignifuge au zinc est choisi dans le groupe constitué de borate de zinc, carbonate de zinc, hydroxyde de carbonate de zinc, borate de zinc hydraté, phosphate de zinc, stannate de zinc, hydrostannate de zinc, sulfure de zinc, oxyde de zinc et combinaisons de ceux-ci.

8. Composition polymère selon l'une quelconque des revendications 1 à 6, dans laquelle le rapport molaire Zn:Br va de plus de 0,0 à 0,135.

9. Conducteur revêtu comprenant :

   un conducteur ; et
   la composition polymère selon l'une quelconque des revendications 1 à 8 disposée au moins partiellement autour du conducteur.

10. Conducteur revêtu selon la revendication 9, dans lequel le conducteur revêtu satisfait à un essai de combustion horizontale.

11. Conducteur revêtu selon l'une quelconque des revendications 9 et 10, dans lequel le conducteur revêtu satisfait à un essai de combustion VW-1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20190185654
- WO 1029005439 A1
- US 2005049335 A1
- US 4574133 A
- US 20160251535 A1

### Non-patent literature cited in the description

- *CHEMICAL ABSTRACTS,* 32588-76-4